Europäisches Patentamt

European Patent Office

Office européen des brevets

(19)

(11) **EP 1 246 036 A2**

(12) **EUROPEAN PATENT APPLICATION**

| | |
|---|---|
| (43) Date of publication:<br>**02.10.2002 Bulletin 2002/40** | (51) Int Cl.$^7$: **G05D 7/01** |

(21) Application number: **01130009.2**

(22) Date of filing: **17.12.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventor: **May, John Henry**<br>**Flitwick, Bedfordshire MK45 1DX (GB)** |
| (30) Priority: **18.12.2000 GB 0030786** | (74) Representative: **Raynor, Simon Mark et al**<br>**Urquhart-Dykes & Lord,**<br>**Midsummer House,**<br>**413 Midsummer Boulevard**<br>**Central Milton Keynes MK9 3BN (GB)** |
| (71) Applicant: **Fluid Controls UK Ltd.**<br>**maulden, Beds MK45 2AA (GB)** | |

(54) **Flow control valve**

(57)     A flow control valve includes a body member (1) having a bore (10) defining a fluid flow passageway. A resiliently-biased piston member (2) is mounted in said passageway for movement relative to the body member (1) in response to the differential fluid pressure across the valve. The piston member (2) defines an annular throttling orifice (28) between said piston member and said bore. At least a portion (10a) of the passageway has a non-uniform cross-section, such that the size of the annular orifice (28) depends on the position of the piston member relative to the body member.

FIG. 1

**Description**

The present invention relates to a flow control valve for delivering a substantially constant flow rate of fluid irrespective of the differential pressure across the valve.

For convenience, the invention will be described with particular reference to an application in a re-circulating hot water radiator central heating system, but it will be appreciated that its uses are not so limited and, indeed, it has wide applicability in fluid systems generally.

It is conventional practice to use calibration valves to balance the distribution of flows in large central heating systems such as in a multi-storey office block. A primary pipe loop re-circulates pumped heated water from the boiler usually located in the basement to the uppermost floor. At each floor a secondary piping loop is directly connected to the primary loop and feeds a series of radiators connected between the supply and return pipes of the secondary loop. Tertiary pipe loops may also be connected to secondary loops, and so forth. Clearly, the differential pressure across any pipe loop is dependent upon the height of the entry and exit points from the boiler and the individual pipe run friction losses. In addition to the difficulties caused by this, the flows required to meet the heating requirements on each floor are not necessarily the same and indeed may even change on a daily basis as a function of individual requirements (turning radiators on and off) or occupancy.

To obtain the desired distribution of flows necessitates the use of balancing valves, which are usually fitted between the last radiator and the connection from the return pipe of the secondary loop to the primary loop, or the tertiary pipe loop to the secondary and so forth. To set the design flow manually the degree of throttling of any particular balancing valve necessitates that a flow meter is also installed in the pipe loop. The flow meter is usually but not exclusively connected by way of differential pressure tappings across the balancing valve. However, adjusting the setting of any one valve affects the differential pressure across all the other valves, thus manual adjustment is both time-consuming and inaccurate. Furthermore, if a change occurs in either the head flow characteristic of the pump or the individual friction resistance of any of the individual pipes, this too may alter the optimal setting of one or all of the balance valves.

An alternative and preferable approach is to use constant flow valves. A common arrangement uses a variable orifice set against a spring so that the differential pressure determines the degree of occlusion across the variable orifice. In one such variable orifice type valve, the variable orifice is formed in the side wall of a spring-biassed piston, which moves relative to a sleeve according to the differential pressure. The orifice area is divided into a front facing fixed orifice and one or more side orifices such that the combined variable discharge area yields the design flow over the required range of differential pressures. This yields both primary and secondary flow paths. When the differential pressure is low, a large discharge area is provided and when the differential pressure is high, the spring is compressed and the sleeve partially occludes the orifice, thereby maintaining a substantially constant flow rate. The piston and the spring may be provided in the form of a cartridge that can be removed from the main valve body and replaced with another cartridge providing a different flow rate and/or different pressure range.

A number of problems exist with this arrangement: first, for low and very low flows the Reynolds numbers are in the lamina or transitional regime of flows, which can cause a lack of repeatability due to the variability in the profile of the approach flow. Second, the variable occlusions machined in the side walls to provide the required constant flow rates necessitate very accurate machining. In conventional form this approach also necessitates that an individual and precise geometry of the variable occlusions is required for any given flow. Owing to the existence of one or more flow paths through the piston orifices, the division of flow between the paths is not necessarily repeatable and therefore this arrangement tends to lead to hysteresis between rising and falling secondary pipe resistances. This can result in the flowrate tolerance being outside the industry expected limits of± 5%.

Another flow control valve described in US 3,464,439 (Budzich) has a resiliently-biassed piston mounted for sliding movement in a cylinder. The piston has an inlet opening in its end face and a number of outlet openings in its side wall. The inlet opening is partially occluded by a tapered probe that extends through the opening, leaving an annular flow passageway. The outlet openings are also partially occluded by the walls of the cylinder. The position of the piston depends on the differential pressure across the valve, the degree of occlusion of both the inlet and outlet openings increasing as the differential pressure increases.

The flow path through the valve is complicated leading to unpredictable flow patterns and poor flow control, particularly at low differential pressures. The device also relies on the use of two sets of shaped apertures, requiring complicated and difficult machining operations, and is mechanically complex.

WO 00/03597 (May) describes an adjustable flow control valve including a resiliently-biassed piston and an adjustable throttle plate that is positioned adjacent one edge of the piston. The distance between the throttle plate and the piston can be adjusted to adjust the flow rate through the valve. The valve is mechanically complex and requires the use of complicated manufacturing processes.

It is an object of the present invention to provide a flow control valve that mitigates at least some of the disadvantages associated with the previous flow control valves, as described above.

According to the present invention there is provided a flow control valve including a body member having a bore defining a fluid flow passageway, a resiliently-biassed piston member mounted in said passageway for movement relative to the body member in response to the differential fluid pressure across the valve, said piston member defining an annular throttling orifice between said piston member and said bore, wherein at least a portion of said passageway has a non-uniform cross-section, such that the size of the annular orifice depends on the position of the piston member relative to the body member.

The valve provides a substantially constant fluid flow rate across a wide range of differential pressures, including very low differential pressures when the flow is in the lamina or transitional regime. The valve is also mechanically simple, and is easy to manufacture and reliable in operation.

The flow rate of fluid through the valve is of course substantially constant only for variations in the differential pressure that lie within a predetermined range: i.e. between upper and lower operational limits, for example from 10kPa to 250kPa, or from 30kPa to 450kPa, depending on the chosen design characteristics of the valve. The statement that the flow rate is "substantially constant" implies that the flow rate is regulated to within a tolerance of, for example, ±5%.

The valve does not rely upon the use of one or more precisely machined geometrically complex shaped side orifices and can therefore be manufactured more cheaply than existing constant flow valves. Also, as the valve only requires a single orifice, the hysteresis effects caused by cascading flows are avoided.

Advantageously, the non-uniform portion of the fluid flow passageway increases in size towards an inlet end of said passageway, and is preferably flared or trumpet-shaped.

Advantageously, the piston member includes a piston head, and said throttling aperture is defined between a downstream edge of said piston head and said non-uniform portion of the fluid flow passageway. The piston head may be substantially cylindrical.

Advantageously, the piston head has a side wall that defines with the non-uniform portion of the fluid flow passageway an annular fluid flow slot, wherein the length and the area of said annular slot depend on the position of the piston member relative to the body member.

The use of frictional flow resistance as provided by the annular slot gives improved flow control at low flow rates.

Advantageously, the piston member includes a support structure, said support structure being mounted for sliding movement in the bore. The piston head may be connected to the support structure for movement therewith and extends from said support structure towards an inlet end of said valve. The support structure may include a substantially axial fluid flow passageway. The support structure may be engaged by a resilient biassing member.

The flow control valve may include a housing in which the body member can be mounted, wherein said housing is capable of accommodating interchangeable flow control valve cartridges having different fluid flow capacities.

An embodiment of the invention will now be described, by way of example, with reference to the accompanying drawings, in which:

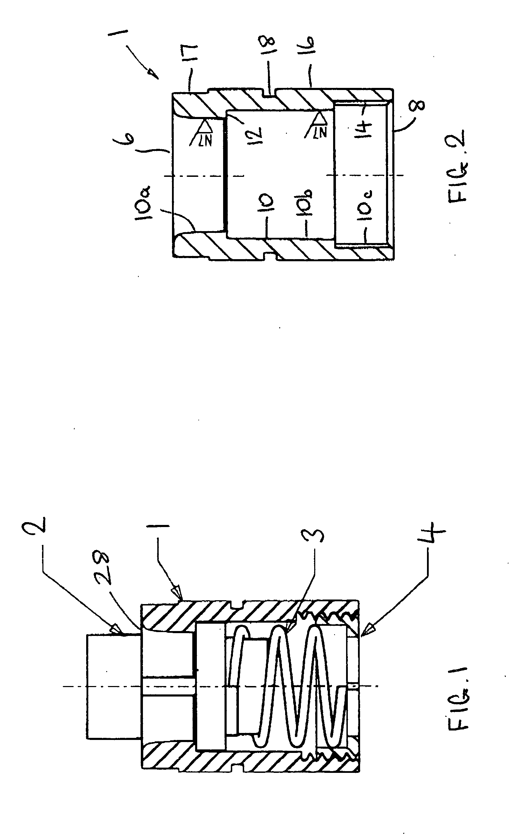

Figure 1 is a partially sectional side view of an assembled flow control valve;

Figure 2 is a sectional side view of a main body member;

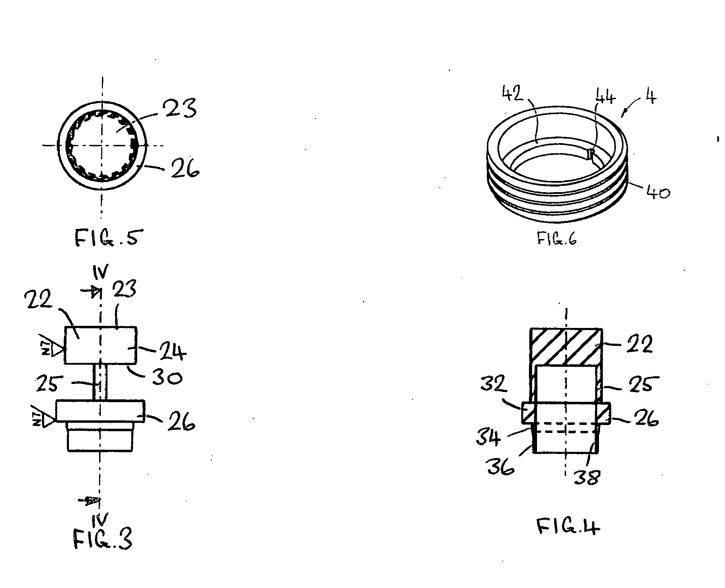

Figure 3 is a side view of a piston member;

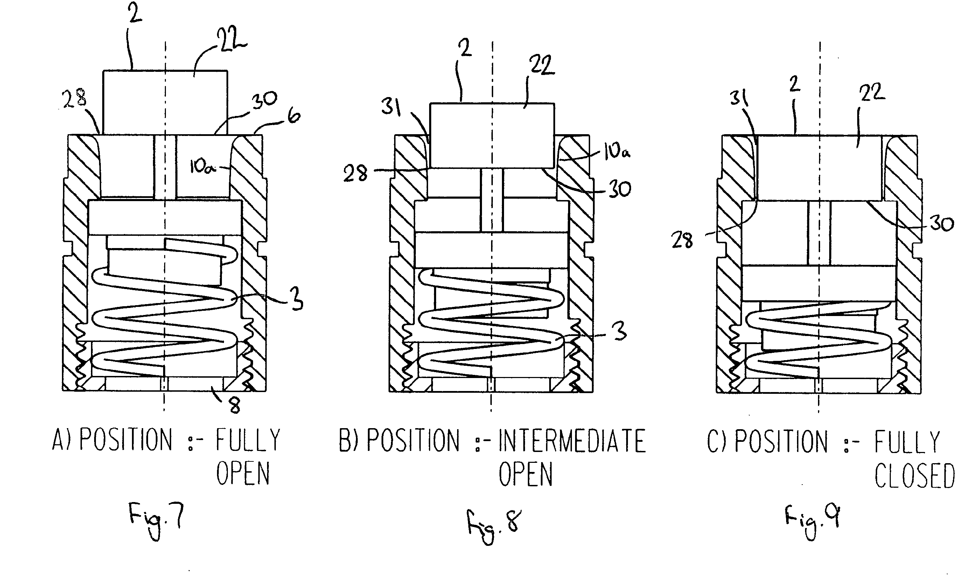

Figure 4 is a section on line IV-IV of Figure 3;

Figure 5 is a top view of the piston member;

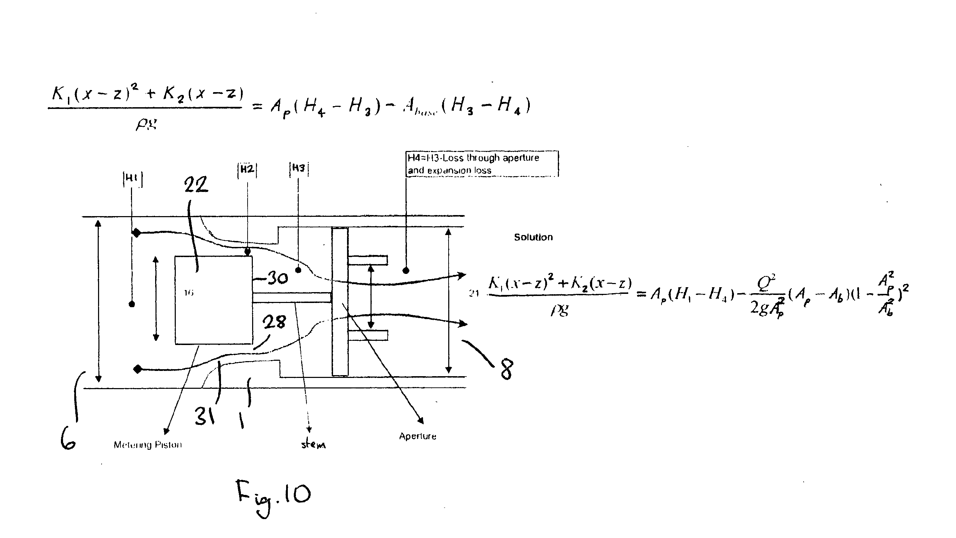

Figure 6 is an isometric view of a bottom ring member;

Figures 7, 8 and 9 are sectional side views showing the valve in a fully open condition, an intermediate open position and fully closed;

Figure 10 is a schematic side section illustrating the flow of fluid through the valve;

Figure 11 is a partial sectional side view, illustrating typical trumpet sizes vs. flow rate;

Figure 12 is a cross-sectional view of the valve, indicating the dimensions affecting the flow of fluid through the valve;

Figure 13 is a cross-sectional view of the valve, including equations relating to the forces acting on the piston when the valve is in a state of equilibrium;

Figure 14 is a partial cross-sectional view at an enlarged scale, including equations relating to the force exerted on the piston by the emergent annular jet;

Figure 15 is a cross-sectional view of the valve, including head loss pressure recovery equations; and

Figure 16 is a flow diagram illustrating the steps of an iterative process for calculating the profile of the fluid flow passageway that defines the annular throttling orifice.

The constant flow valve is constructed in the form of a cartridge that, in use, is mounted in a housing (not shown). The valve includes a main body member 1, a piston member 2, a compression spring 3 and a bottom ring 4. The dimensions of these components may vary, to provide different predetermined fluid flow rates, and the housing may be capable of accommodating a range of different cartridges, according to the required flow rate.

The main body 1 is substantially cylindrical having an inlet end 6 and a outlet end 8. An axial bore 10 that defines a fluid flow passageway extends longitudinally through the main body, the bore including an upper portion 10a, a middle portion 10b and a lower portion 10c.

The upper portion 10a of the bore is of non-uniform diameter and increases in diameter towards the inlet end 6. This upper portion is flared or trumpet-shaped and, in the example shown in the drawings, it increases in diameter from approximately 13mm at its lower end to approximately 15mm at the inlet end. The shape of the flared bore is defined by a polynomial progression, as in the bell of a trumpet.

The middle portion 10b of the bore has a uniform diameter, which in the example is approximately 15.5mm. This provides an annular step 12 at the junction between the middle portion 10b and the upper portion 10a.

The lower portion 10c is substantially the same diameter as the middle portion 10b, but it includes a screw thread 14 that is cut into the cylindrical wall of the bore.

The external surface 16 of the body member is substantially cylindrical, in the example having a diameter of approximately 20.5mm. A reduced diameter portion 17 having a diameter of approximately 20mm is provided towards the inlet end 6, and a groove 18 having a diameter of approximately 19mm extends circumferentially around the middle of the external cylindrical surface 16. The reduced diameter portion 17 and the groove 18 are used for mounting the body member 1 in a housing, the groove 18 accommodating an O-ring (not shown) for sealing the valve against leaks.

The piston member 2 includes a solid cylindrical head 22 having a circular end face 23 and a cylindrical side wall 24, which is connected by two legs 25 to a support structure 26. In the example, the head 22 has an outside diameter of approximately 12.5mm and a length of about 6.5mm.

The outside diameter of the head 22 is slightly less than the minimum diameter of the flared upper bore portion 10a and is located within, or just above, the inlet end 6 of the fluid flow passageway, to define an annular throttling orifice 28 between the flared wall of the upper bore portion 10a and the lower edge 30 of the head 22. The area of this orifice depends on the position of the piston member 2 relative to the body member 1.

In addition, the cylindrical side wall 24 of the piston head 22 and the flared wall of the upper bore portion 10a define an annular fluid flow slot 31, the length and cross-sectional area of which depend on the position of the piston member 2 relative to the body member 1. In the example, the length of this slot can vary from 0mm to 6.5mm.

The support structure 26 includes an upper portion 32, a middle portion 34 and lower portion 36. An axial bore 38 extends through the support structure 26, to provide a fluid flow passageway.

The support structure 26 is located within the middle bore portion 10b of the body member 1. The upper portion 32 has an outside diameter that is fractionally less than the internal diameter of the middle bore portion 10b, allowing the piston member 2 to slide longitudinally relative to the main body member 1. Upwards movement of the piston member 2 is limited by the upper portion 32 of the support structure 26 engaging the step 12 in the body member 1, whereas downwards movement is limited by engagement with the bottom ring 4.

The middle portion 34 of the support structure 26 has an outside diameter slightly greater than the internal diameter of the compression spring 3, which has a push fit over that portion. The lower portion 36 has a slightly smaller diameter, to extend loosely through the coils of the spring 3.

The bottom ring 4 is annular and has an external screw thread 40 that engages the internal screw thread 14 in the lower bore portion 10c. A flange 42 extends inwards at the lower end of the bottom ring 4, to provide a seat for the lower end of the spring 3. Two diametrically opposed notches 44 are provided in the flange 42, for engagement by a tightening tool.

In the assembled flow control valve, at very low differential pressures the piston member 2 is biased upwards by the compressed spring 3 to the fully open position shown in figure 7, in which the lower edge 30 of the piston head is approximately level with the inlet end 6 of the upper bore portion 10a. In use, fluid flows through the valve from the inlet end 6 to the outlet end 8. The fluid flows past the piston head 22 through the annular throttling orifice 28 between

EP 1 246 036 A2

the lower edge 30 of the piston head 22 and the flared upper bore portion 10a. The fluid then passes through the bore 38 in the piston support structure 26 and the middle and lower bore portions 10b,10c in the body member 1 before exiting the valve through the outlet end 8.

When the differential pressure across the valve increases, the piston member 2 is depressed to an intermediate open position, compressing the spring 3, as shown in figure 8. The length of the annular slot 31 between the cylindrical wall of the piston head 22 and the upper bore portion 10a is thus increased, and the cross-sectional area of that slot is decreased. At the same time, the cross-sectional area of the annular throttling orifice 28 between the lower edge 30 of the piston head 22 and the flared upper bore portion 10a is reduced.

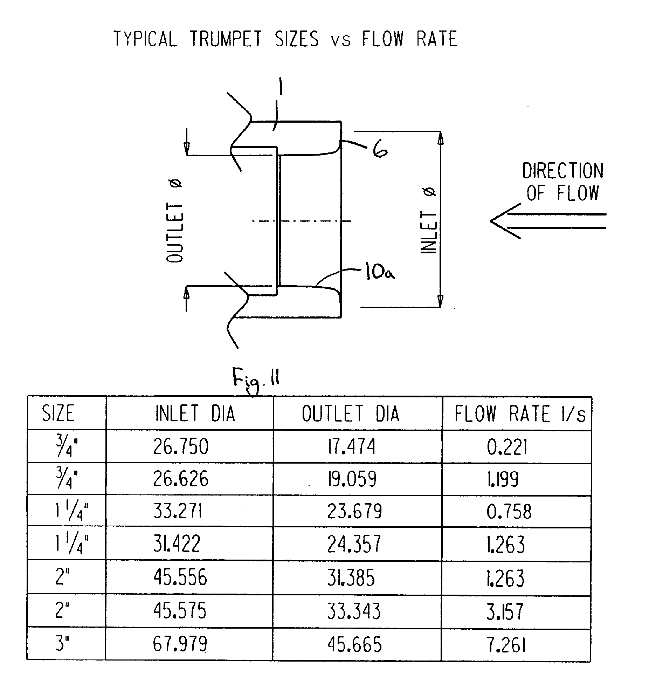

With further increases in the differential pressure, the piston member 2 is depressed further, until it reaches a fully closed position, as shown in figure 9. The length of the annular slot 31 between the cylindrical wall of the piston head 22 and the upper bore portion 10a is further increased, and the cross-sectional area of that slot is further decreased and the cross-sectional area of the annular throttling orifice 28 is further reduced.

As the fluid flows through the annular slot 31, frictional losses are incurred, which tend to restrict the flow of fluid through the valve. These frictional losses are proportional to the length of the slot and inversely proportional to its length, and therefore increase with the differential pressure across the valve, as the piston member 2 is depressed.

Further, as the fluid flows through the throttling orifice 28, there is a sudden drop in fluid flow speed, leading to a pressure drop across the orifice. This pressure drop is inversely proportional to the cross-sectional area of the orifice, and therefore increases with the differential pressure across the valve, as the piston member 2 is depressed.

The flow of fluid through the valve is illustrated in figure 10. The valve may be manufactured in different sizes, to provide different flow rates. Figure 11 includes a table showing typical trumpet sizes for different designed flow rates.

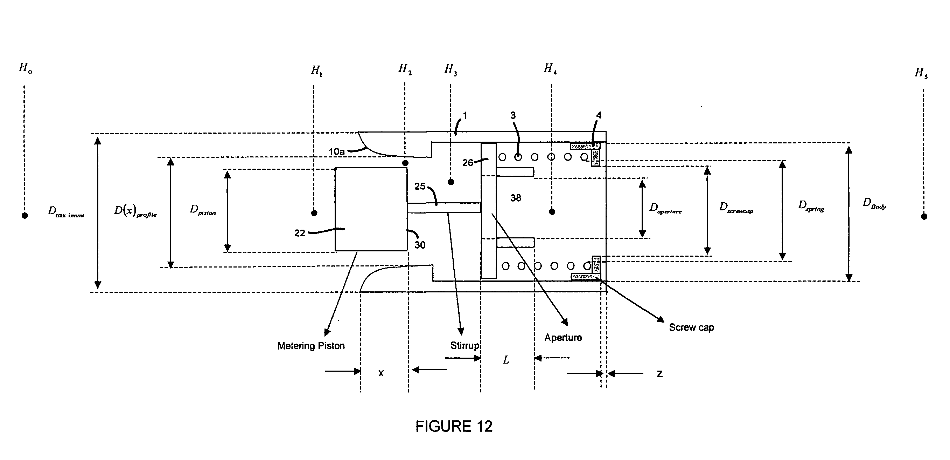

For correct operation of the valve, it is essential that the profile of the upper bore portion 10a is correct, since the size of the annular fluid flow orifice depends on the position of the piston 2 relative to that bore. The profile is defined in terms of the diameter $D(x)_{profile}$ of the bore at a piston displacement $x$, which is calculated by means of an iterative process that will now be described with reference to Figs. 12 to 16 of the drawings. The quantities and equations used in the process are set out in the chart of nomenclature attached hereto.

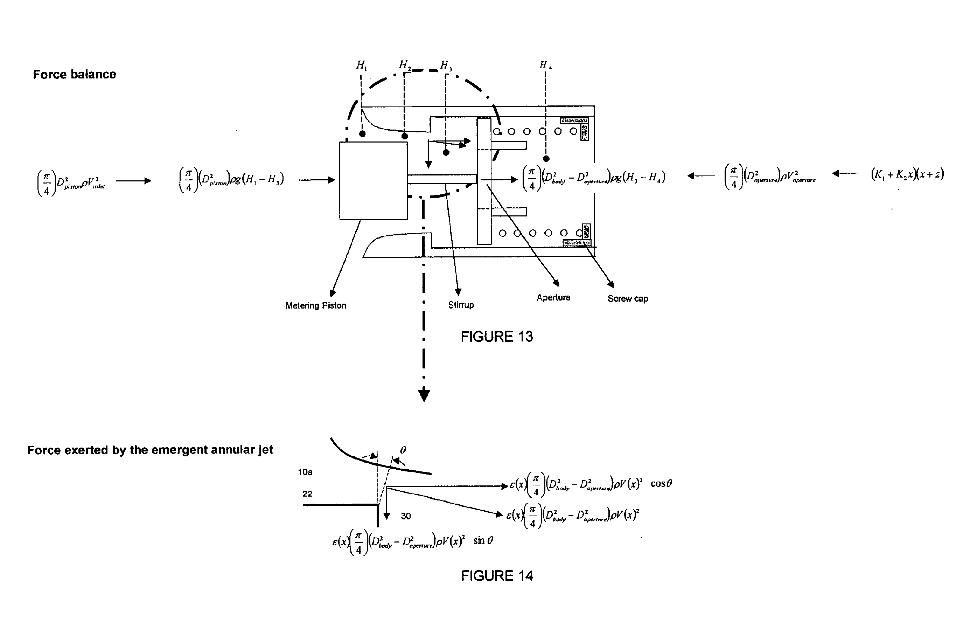

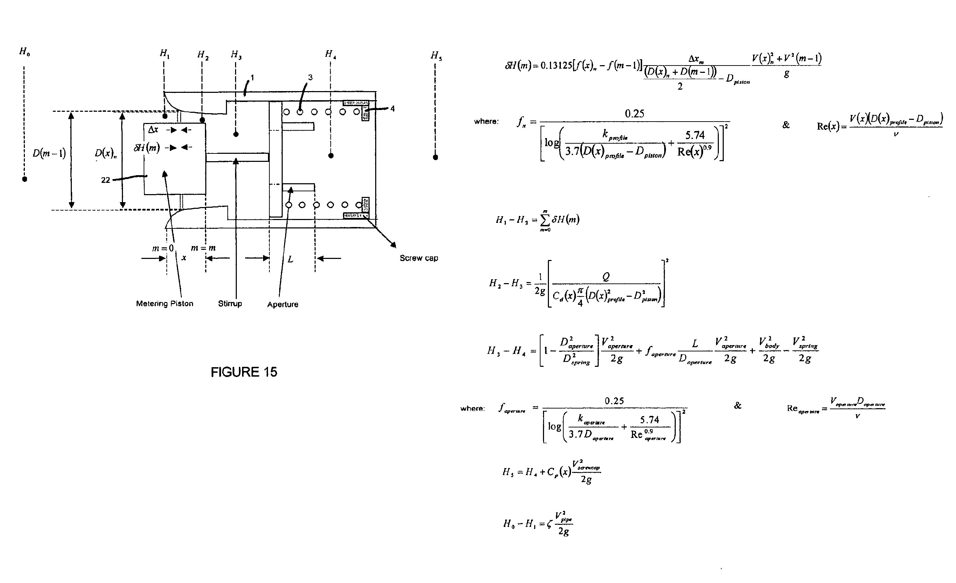

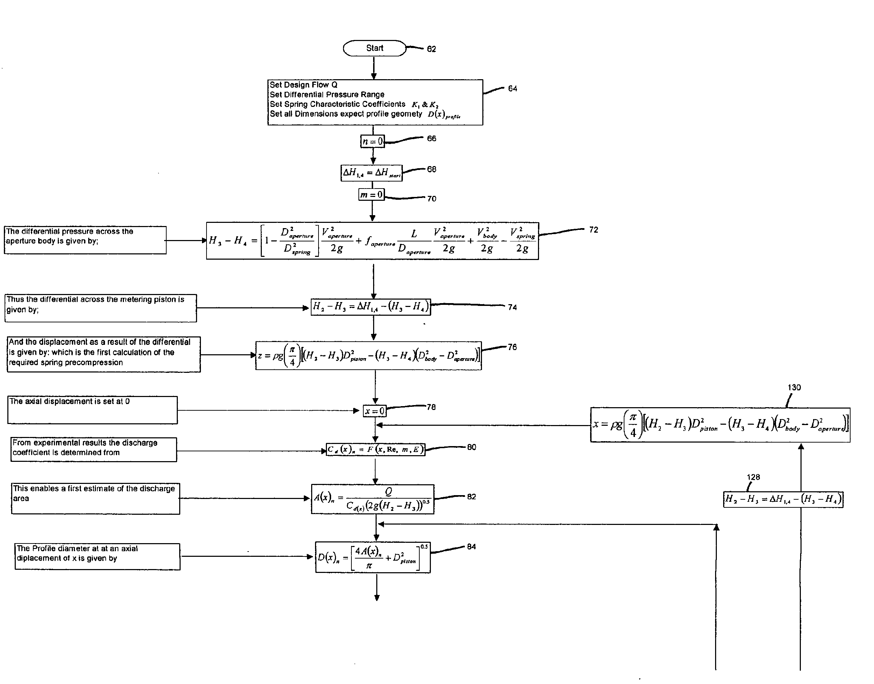

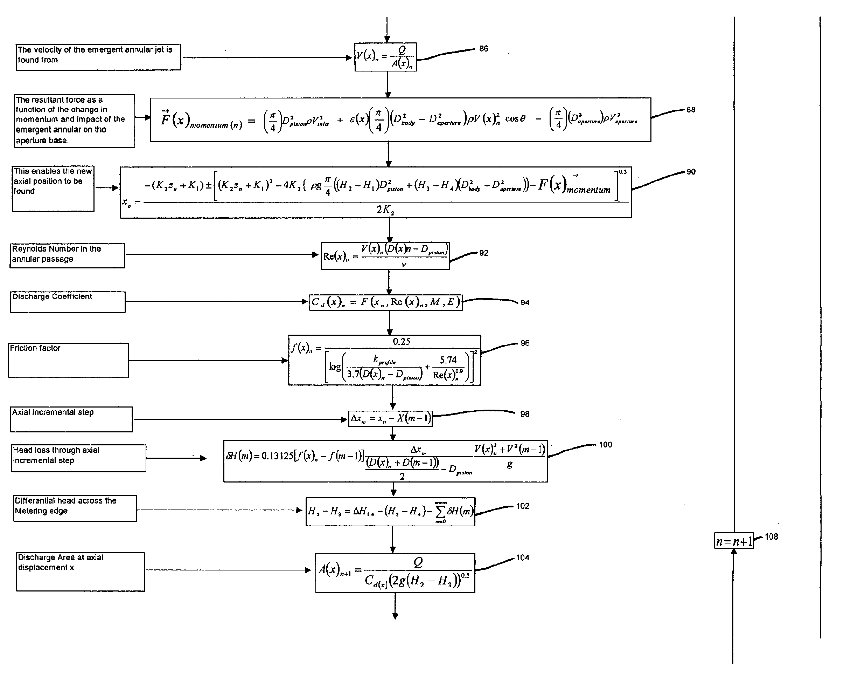

Figure 12 is a cross-sectional view of the valve, indicating the dimensions affecting the flow of fluid through the valve. Figure 13 includes a set of equations relating to the forces acting on the piston 2 when the valve is in a state of equilibrium and figures 14 and 15 include equations relating to the force exerted on the piston by the emergent annular jet.

The piston 2 is shown in Figs. 12 to 15 at a displacement $x$ from its rest position, defined by the upstream end of the bore portion 10a. The profile of the bore portion 10a is defined in terms of the diameter $D(x)_{profile}$ of the bore at a displacement $x$, that position being defined by the downstream edge 30 of the piston head 22.

The forces acting on the piston 2 at equilibrium are balanced and include a first force term $(\pi/4)D^2_{piston}\rho g(H_1 - H_3)$ and a second force term $(\pi/4)(D^2_{body} - D^2_{aperture})\rho g(H_3 - H_4)$ that result from the differential pressures across respectively the piston head 22 and the aperture 38 in the support structure 26. A third force term $(K_1 + K_2 x)(x + z)$ results from the compressed spring. A fourth force term $(\pi/4)D^2_{piston}\rho V^2_{inlet}$, a fifth force term $(\pi/4)D^2_{aperture}\rho V^2_{aperture}$ and a sixth force term $\varepsilon(x)(\pi/4)(D^2_{body} - D^2_{aperture})\rho V(x)^2$ result from the rate of change of momentum of the fluid as it passes through respectively the inlet, the aperture 38 in the support structure 26 and the throttling orifice 28. The sixth force term, which relates to the force exerted by the emergent annular jet, may be resolved into an axial component $\varepsilon(x)(\pi/4)(D^2_{body} - D^2_{aperture})\rho V(x)^2 \cos\theta$ and a radial component $\varepsilon(x)(\pi/4)(D^2_{body} - D^2_{aperture})\rho V(x)^2 \sin\theta$, where $\rho$ is the density of the fluid and $\theta$ is the angle between a line normal to the surface of the probe element at the throttling orifice and an intersecting line that is perpendicular to the longitudinal axis of the fluid flow passageway.

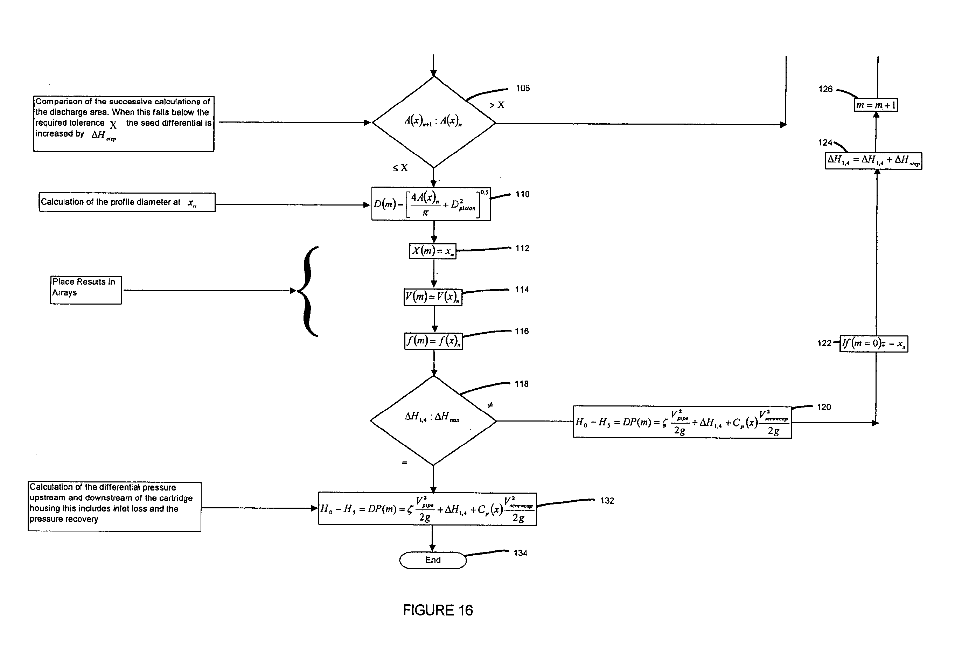

If the angle $\theta$ is small, the radial component of the momentum term becomes very small and the size of the annular throttling orifice approximates to the difference in area of the piston head 22 and the cross-sectional area of the bore portion 10a at the displacement $x$. This approximation is used in the equations set out in the flow diagram shown in Fig. 16. At larger values of $\theta$, the radial component of momentum becomes more significant and the trigonometric functions set out above have to be taken into account, with appropriate revisions being made to the flow diagram.

The pressure loss across the valve can be determined by summing the head losses across the various parts of the valve and the equations relating to those head losses are set out in Fig. 15. The head losses result from friction effects and discharge coefficients as the fluid flows from one section of the valve to the next.

The iterative process comprises a number of steps, which are set in the form of a flow diagram in Fig. 16. The process includes a start step 62, followed by a definition step 64 in which the following values are defined: the designed flow rate Q, the differential pressure range, the spring characteristic coefficients $K_1$ and $K_2$ and all essential dimensions of the valve except the profile geometry $D(x)_{profile}$. A first iterative loop count $n$ is set to zero (step 66), the differential head $\Delta H_{1,4}$ is set at a start value $\Delta H_{start}$ (step 68) and a second iterative loop count $m$ is set to zero (step 70).

The differential pressure across the aperture body is determined (step 72), the differential pressure across the piston head 22 is determined (step 74) and the displacement of the piston is determined as a result of the differential pressure, this being the first calculation of the required spring precompression (step 76). The axial displacement $x$ is then set to zero (step 78).

The process then comprises a loop including the following steps, which are repeated until completion of the process.

The discharge coefficient $C_d(x)_n$ is found from experimental data (step 80). This allows a first estimate to be made of the discharge area (step 82). The profile diameter at an axial displacement $x$ is determined (step 84) and the velocity of the emergent jet is found (step 86). The resultant force acting on the piston is determined as a function of the change in momentum and the impact of the emergent jet on the aperture base (step 88). This enables the new axial position of the piston to be found (step 90).

Equations are then solved to determine the Reynolds Number in the annular passage (step 92), the discharge coefficient (step 94) and the friction factor (step 96).

The axial position of the piston is then incremented (step 98) and equations are then solved to determine the head loss through the axial increment (step 100), the differential head across the metering edge (step 102) and the discharge area at the axial displacement $x$ (step 104).

A comparison is then made (step 106) of the successive calculations of the discharge area with respect to a tolerance value X. If the difference in those values exceeds the tolerance value X the count value $n$ is incremented (step 108) and process returns to step 84 and is repeated. If the difference in the compared values is equal to or less than the tolerance value X, the process proceeds and the profile diameter at the displacement value $x_n$ is calculated (step 110). The results of the calculations are then placed in arrays (steps 112, 114, 116).

The differential head across the valve is then compared with the maximum differential head value (step 118) and if those values are not equal, the head loss is calculated (step 120). If the count value $m$ equals zero, the spring precompression $z$ is set equal to a value $x_n$ (step 122) and the total differential pressure and the count value $m$ are incremented (steps 124 and 126). The difference in head across the annular orifice is calculated (step 128) and the displacement of the piston is calculated (step 130) and the process then returns to step 80 and is repeated.

If in step 118 the compared values are equal, the differential pressure upstream and downstream of the cartridge housing is calculated (step 132). This includes inlet loss and the pressure recovery. The process then ends (step 134).

The process described above thus enables the correct profile of the probe element to be calculated for any given value, to provide the required constant flow rate for a given range of differential pressures.

The valve therefore reacts to changes in the differential pressure by opening or closing, to maintain a substantially constant flow rate of fluid through the valve, the flow being controlled both by the pressure drop across the annular orifice 28, and the frictional losses in the annular passageway 31 between the cylindrical wall of the piston head 22 and the wall of the upper bore portion 10a. The combination of these two effects has been found to provide a very stable flow rate across a wide range of differential pressures, including very low differential pressures.

Various modifications of the invention are possible, some examples of which will now be described.

The strength of the spring may also be varied to provide different designed flow rates. The spring may be replaced by another resilient biassing member, for example an elastomeric material or a cylinder of compressed gas. Although the valve is preferably made of stainless steel, it may also be made of other materials including plastics, ceramics and composites. Different methods of manufacture may also be employed, including for example investment casting and die casting.

| Nomenclature | | |
|---|---|---|
| $A(x)$ | Metering Area at an axial position x | Metres^2 |
| $C_d(x)$ | Discharge Coefficient F(x,Re,m,E) | Dimensionless |
| $C_p(x)$ | Pressure recovery coefficient of the emergent screw cap jet | Dimensionless |
| $D_{aperture}$ | Aperture Diameter | Metres |
| $D_{Body}$ | Internal Diameter of the Body | Metres |
| $D_{max\ imum}$ | Outer Diameter of the body Maximum possible diameter of the profile | Metres |
| $D_{piston}$ | Piston Diameter | Metres |
| $D(x)_{profile}$ | Diameter of the profile at an axial position x | Metres |
| $D_{screwcap}$ | Internal Diameter of the screwcap | Metres |
| $D_{spring}$ | Internal Diameter of the spring | Metres |
| E | Velocity of approach factor $\frac{1}{1M^2}$ | Dimensionless |
| $f_{aperture}$ | Aperture friction factor | Dimensionless |
| $f(x)$ | Friction factor between the piston and profile at axial position x | Dimensionless |
| $F(x)_{momentum}$ | Summation of the change in momentum terms | Newtons |

(continued)

| Nomenclature | | |
|---|---|---|
| g | Acceleration due to gravity | Metres/Sec^2 |
| $H_0$ | Head upstream of the Cartridge assembly | Metres |
| $H_1$ | Head upstream of the Profile | Metres |
| $H_2$ | Head Upstream of the metering edge | Metres |
| $H_3$ | Head downstream of the metering orifice | Metres |
| $H_4$ | Head downstream of the aperture | Metres |
| $H_5$ | Head in the downsream of the cartridge assembly | Metres |
| k | Roughness height | Metres |
| $K_1$ | Spring Rate Constant | Newtons/ Metre |
| $K_2$ | Spring Rate Gradient | Newton/Metre^2 |
| $K(x)$ | Effective Spring Rate $K(x) = K_1 + K_2 x$ | Newtons/Metre |
| L | Aperture Length | Metres |
| M | Ratio of the inlet area and the metering area | Dimensionless |
| $Re_{aperture}$ | Reynolds Number in the aperture | Dimensionless |
| $Re(x)$ | Reynolds Number between the profile and metering edge at axial position x | Dimensionless |
| $V_{aperture}$ | Mean Velocity in the aperture | Metres/sec |
| $V_{body}$ | Mean velocity in the body | Metres/sec |
| $V_{inlet}$ | Mean Inlet velocity | Metres/sec |
| $V_{screwcap}$ | Mean screwcap velocity | Metres/sec |
| $V_{spring}$ | Mean velocity in the inner diameter of the spring | Metres/sec |
| $V(x)$ | Mean velocity at the metering edge | Metres/sec |
| x | Axial Displacement of the Orifice | Metres |
| z | Precompression of the spring | Metres |
| P | Fluid Density | Kg/Metre^3 |
| ν | Kinematic viscosity | Metres^2/sec |
| X | Tolerance expressed as an area term | Metres^2 |
| $\delta H(m)$ | Head loss in between the profile and the piston over incremental distance | Metres |
| $\Delta x$ | Incremental distance | Metres |
| $\Delta H_{step}$ | Incremental pressure step | Metres |
| ζ | Inlet loss coefficient | Dimensionless |
| $\varepsilon(x)$ | Efficiency at which the momentum of annular jet strikes the spring cap | Dimensionless |
| Subscripts | m,n counts used in the flow chart. | |

**Claims**

1. A flow control valve including a body member having a bore defining a fluid flow passageway, a resiliently-biassed piston member mounted in said passageway for movement relative to the body member in response to the differential fluid pressure across the valve, said piston member defining an annular throttling orifice between said piston member and said bore, wherein at least a portion of said passageway has a non-uniform cross-section, such that the size of the annular orifice depends on the position of the piston member relative to the body member; **characterised in that** the piston member has a side wall that defines with the non-uniform portion of the fluid flow passageway an annular fluid flow slot, wherein the length and the cross-sectional area of said annular slot depend on the position of the piston member relative to the body member.

2. A flow control valve according to claim 1, wherein the non-uniform portion of the fluid flow passageway increases in size towards an inlet end of said passageway.

3. A flow control valve according to claim 2, wherein the non-uniform portion of the fluid flow passageway is flared.

4. A flow control valve according to any one of the preceding claims, wherein said piston member includes a piston head, and said throttling aperture is defined between a downstream edge of said piston head and said non-uniform portion of the fluid flow passageway.

5. A flow control valve according to claim 4, wherein the piston head is substantially cylindrical.

6. A flow control valve according to claim 4 or claim 5, wherein the piston member includes a support structure, said support structure being mounted for sliding movement in the bore.

7. A flow control valve according to claim 6, wherein the piston head is connected to the support structure for movement therewith and extends from said support structure towards an inlet end of said valve.

8. A flow control valve according to claim 6 or claim 7, wherein the support structure includes a substantially axial fluid flow passageway.

9. A flow control valve according to any one of claims 6 to 8, wherein the support structure is engaged by a resilient biassing member.

10. A flow control valve according to any one of the preceding claims, including a housing in which the body member can be mounted, wherein said housing is capable of accommodating interchangeable flow control valve cartridges having different fluid flow capacities.

11. A flow control valve substantially as described herein with reference to and as illustrated by the accompanying drawings.

FIG. 2

FIG. 1

FIG.6

FIG.4

FIG.5

FIG.3

A) POSITION :- FULLY OPEN

Fig. 7

B) POSITION :- INTERMEDIATE OPEN

Fig. 8

C) POSITION :- FULLY CLOSED

Fig. 9

EP 1 246 036 A2

$$\frac{K_1(x-z)^2 + K_2(x-z)}{\rho g} = A_P(H_4 - H_3) - A_{base}(H_3 - H_4)$$

$$\frac{K_1(x-z)^2 + K_2(x-z)}{\rho g} = A_P(H_1 - H_4) - \frac{Q^2}{2gA_P^2}(A_\rho - A_b)(1 - \frac{A_P^2}{A_b^2})^2$$

H4=H3-Loss through aperture and expansion loss

Solution

Aperture

stem

Metering Piston

Fig. 10

# TYPICAL TRUMPET SIZES vs FLOW RATE

Fig. 11

| SIZE | INLET DIA | OUTLET DIA | FLOW RATE l/s |
|------|-----------|------------|---------------|
| ¾" | 26.750 | 17.474 | 0.221 |
| ¾" | 26.626 | 19.059 | 1.199 |
| 1¼" | 33.271 | 23.679 | 0.758 |
| 1¼" | 31.422 | 24.357 | 1.263 |
| 2" | 45.556 | 31.385 | 1.263 |
| 2" | 45.575 | 33.343 | 3.157 |
| 3" | 67.979 | 45.665 | 7.261 |

EP 1 246 036 A2

FIGURE 12

**Force balance**

$$\left(\frac{\pi}{4}\right)D_{piston}^2\rho V_{inlet}^2 \longrightarrow \left(\frac{\pi}{4}\right)\left(D_{piston}^2\right)\rho g\left(H_1 - H_3\right) \longrightarrow$$

$H_1 \quad H_2 \quad H_3 \qquad H_4$

$$\left(\frac{\pi}{4}\right)\left(D_{body}^2 - D_{aperture}^2\right)\rho g\left(H_3 - H_4\right) \longleftarrow \left(\frac{\pi}{4}\right)\left(D_{aperture}^2\right)\rho V_{aperture}^2 \longleftarrow \left(K_1 + K_2 x\right)\left(x + z\right)$$

Metering Piston    Stirrup    Aperture    Screw cap

FIGURE 13

**Force exerted by the emergent annular jet**

10a

22

$\theta$

30

$$\varepsilon(x)\left(\frac{\pi}{4}\right)\left(D_{body}^2 - D_{aperture}^2\right)\rho V(x)^2 \ \cos\theta$$

$$\varepsilon(x)\left(\frac{\pi}{4}\right)\left(D_{body}^2 - D_{aperture}^2\right)\rho V(x)^2$$

$$\varepsilon(x)\left(\frac{\pi}{4}\right)\left(D_{body}^2 - D_{aperture}^2\right)\rho V(x)^2 \ \sin\theta$$

FIGURE 14

FIGURE 15

$$\delta H(m) = 0.13125[f(x)_n - f(m-1)]\frac{\Delta x_m}{\frac{(D(x)_n + D(m-1))}{2} - D_{piston}}\frac{V(x)_n^2 + V^2(m-1)}{g}$$

where: $f_x = \dfrac{0.25}{\left[\log\left(\dfrac{k_{profile}}{3.7(D(x)_{profile} - D_{piston})} + \dfrac{5.74}{Re(x)^{0.9}}\right)\right]^2}$ & $Re(x) = \dfrac{V(x)(D(x)_{profile} - D_{piston})}{\nu}$

$$H_1 - H_2 = \sum_{m=0}^{m}\delta H(m)$$

$$H_2 - H_3 = \frac{1}{2g}\left[\frac{Q}{C_d(x)\frac{\pi}{4}(D(x)^2_{profile} - D^2_{piston})}\right]^2$$

$$H_3 - H_4 = \left[1 - \frac{D^2_{aperture}}{D^2_{spring}}\right]\frac{V^2_{aperture}}{2g} + f_{aperture}\frac{L}{D_{aperture}}\frac{V^2_{aperture}}{2g} + \frac{V^2_{body}}{2g} - \frac{V^2_{spring}}{2g}$$

where: $f_{aperture} = \dfrac{0.25}{\left[\log\left(\dfrac{k_{aperture}}{3.7D_{aperture}} + \dfrac{5.74}{Re^{0.9}_{aperture}}\right)\right]^2}$ & $Re_{aperture} = \dfrac{V_{aperture}D_{aperture}}{\nu}$

$$H_5 = H_4 + C_p(x)\frac{V^2_{screwcap}}{2g}$$

$$H_0 - H_1 = \zeta\frac{V^2_{pipe}}{2g}$$

Start — 62

Set Design Flow Q
Set Differential Pressure Range
Set Spring Characteristic Coefficients $K_1 \& K_2$
Set all Dimensions expect profile geometry $D(x)_{profile}$ — 64

$n = 0$ — 66

$\Delta H_{1,4} = \Delta H_{start}$ — 68

$m = 0$ — 70

The differential pressure across the aperture body is given by;

$$H_3 - H_4 = \left[1 - \frac{D^2_{aperture}}{D^2_{spring}}\right]\frac{V^2_{aperture}}{2g} + f_{aperture}\frac{L}{D_{aperture}}\frac{V^2_{aperture}}{2g} + \frac{V^2_{body}}{2g} - \frac{V^2_{spring}}{2g}$$ — 72

Thus the differential across the metering piston is given by;

$$H_2 - H_3 = \Delta H_{1,4} - (H_3 - H_4)$$ — 74

And the displacement as a result of the differential is given by: which is the first calculation of the required spring precompression

$$z = \rho g\left(\frac{\pi}{4}\right)\left[(H_2 - H_3)D^2_{piston} - (H_3 - H_4)(D^2_{body} - D^2_{aperture})\right]$$ — 76

The axial displacement is set at 0

$x = 0$ — 78

From experimental results the discharge coefficient is determined from

$C_d(x)_n = F(x, Re, m, E)$ — 80

This enables a first estimate of the discharge area

$$A(x)_n = \frac{Q}{C_{d(x)}(2g(H_2 - H_3))^{0.5}}$$ — 82

The Profile diameter at at an axial diplacement of x is given by

$$D(x)_n = \left[\frac{4A(x)_n}{\pi} + D^2_{piston}\right]^{0.5}$$ — 84

130
$$x = \rho g\left(\frac{\pi}{4}\right)\left[(H_2 - H_3)D^2_{piston} - (H_3 - H_4)(D^2_{body} - D^2_{aperture})\right]$$

128
$$H_2 - H_3 = \Delta H_{1,4} - (H_3 - H_4)$$

17

EP 1 246 036 A2

The velocity of the emergent annular jet is found from

$$V(x)_n = \frac{Q}{A(x)_n}$$  86

The resultant force as a function of the change in momentum and impact of the emergent annular on the aperture base.

$$\vec{F}(x)_{momentum\,(n)} = \left(\frac{\pi}{4}\right)D_{piston}^2\rho V_{inlet}^2 + \varepsilon(x)\left(\frac{\pi}{4}\right)\left(D_{body}^2 - D_{aperture}^2\right)\rho V(x)_n^2 \cos\theta - \left(\frac{\pi}{4}\right)\left(D_{aperture}^2\right)\rho V_{aperture}^2$$  88

This enables the new axial position to be found

$$x_n = \frac{-(K_2 z_n + K_1) \pm \left[(K_2 z_n + K_1)^2 - 4K_2\left\{\rho g\frac{\pi}{4}\left((H_2 - H_1)D_{piston}^2 + (H_3 - H_4)\left(D_{body}^2 - D_{aperture}^2\right)\right) - \vec{F}(x)_{momentum}\right.\right]^{0.5}}{2K_2}$$  90

Reynolds Number in the annular passage

$$Re(x)_n = \frac{V(x)_n\left(D(x)n - D_{piston}\right)}{v}$$  92

Discharge Coefficient

$$C_d(x)_n = F\left(x_n, Re(x)_n, M, E\right)$$  94

Friction factor

$$f(x)_n = \frac{0.25}{\left[\log\left(\frac{k_{profile}}{3.7\left(D(x)_n - D_{piston}\right)} + \frac{5.74}{Re(x)_n^{0.9}}\right)\right]^2}$$  96

Axial incremental step

$$\Delta x_m = x_n - X(m-1)$$  98

Head loss through axial incremental step

$$\delta H(m) = 0.13125\left[f(x)_n - f(m-1)\right]\frac{\Delta x_m}{\frac{(D(x)_n + D(m-1))}{2} - D_{piston}}\frac{V(x)_n^2 + V^2(m-1)}{g}$$  100

Differential head across the Metering edge

$$H_2 - H_3 = \Delta H_{1,4} - (H_3 - H_4) - \sum_{m=0}^{m=m}\delta H(m)$$  102

Discharge Area at axial displacement x

$$A(x)_{n+1} = \frac{Q}{C_{d(x)}\left(2g(H_2 - H_3)\right)^{0.5}}$$  104

$$n = n+1$$  108

Comparison of the successive calculations of the discharge area. When this falls below the required tolerance $\chi$ the seed differential is increased by $\Delta H_{step}$

106

$A(x)_{n+1} : A(x)_n$

$> X$

$\leq X$

Calculation of the profile diameter at $x_n$

110

$$D(m) = \left[\frac{4A(x)_n}{\pi} + D_{piston}^2\right]^{0.5}$$

112

$$X(m) = x_n$$

Place Results in Arrays

114

$$V(m) = V(x)_n$$

116

$$f(m) = f(x)_n$$

118

$\Delta H_{1,4} : \Delta H_{max}$

$\neq$

120

$$H_0 - H_s = DP(m) = \zeta\frac{V_{pipe}^2}{2g} + \Delta H_{1,4} + C_p(x)\frac{V_{screwcap}^2}{2g}$$

$=$

Calculation of the differential pressure upstream and downstream of the cartridge housing this includes inlet loss and the pressure recovery

132

$$H_0 - H_s = DP(m) = \zeta\frac{V_{pipe}^2}{2g} + \Delta H_{1,4} + C_p(x)\frac{V_{screwcap}^2}{2g}$$

134

End

126

$$m = m+1$$

124

$$\Delta H_{1,4} = \Delta H_{1,4} + \Delta H_{step}$$

122

$$If\,(m = 0)\,z = x_n$$

FIGURE 16